Europäisches Patentamt

European Patent Office

Office européen des brevets

(11) Veröffentlichungsnummer: **0 561 050 B1**

# (12) EUROPÄISCHE PATENTSCHRIFT

(45) Veröffentlichungstag der Patentschrift: **04.10.95**

(51) Int. Cl.⁶: **B60T 8/18**, B60T 8/26

(21) Anmeldenummer: **92120838.5**

(22) Anmeldetag: **07.12.92**

(54) **Bremsdruckregeleinrichtung zur Verschleissoptimierung zwischen Bremsen von Nutzfahrzeugen.**

(30) Priorität: **18.03.92 DE 4208631**

(43) Veröffentlichungstag der Anmeldung:
**22.09.93 Patentblatt 93/38**

(45) Bekanntmachung des Hinweises auf die Patenterteilung:
**04.10.95 Patentblatt 95/40**

(84) Benannte Vertragsstaaten:
**AT DE FR GB IT NL SE**

(56) Entgegenhaltungen:
**EP-A- 0 065 151     DE-A- 2 500 219**
**DE-A- 3 312 980     DE-A- 3 313 078**
**DE-B- 1 911 380     FR-A- 2 170 982**
**US-A- 3 148 919**

**PATENT ABSTRACTS OF JAPAN vol. 12, no. 78 (M-675)(2925) 11. März 1988**

**PATENT ABSTRACTS OF JAPAN vol. 9, no. 73 (M-368)3. April 1985**

**Kontruktionsblatt DB 2000-K12, 1976, Knorr-Bremse AG, München**

(73) Patentinhaber: **KNORR-BREMSE SYSTEME FÜR NUTZFAHRZEUGE GmbH**
**Moosacher Strasse 80**
**D-80809 München (DE)**

(72) Erfinder: **Vollmer, Otto**
**Joergstrasse 50**
**W-8000 München 21 (DE)**

**Beschreibung**

Die Erfindung betrifft eine Bremsdruckregeleinrichtung nach dem Gattungsbegriff des Patentanspruches 1.

Bei der Bremsbetätigung an Nutzfahrzeugen kann zwischen Vorder- und Hinterachse unterschiedlicher Verschleiß an den Bremsbelägen auftreten; dies gilt auch für die Bremsen einer Achse als auch für den Belagverschleiß an Zugfahrzeug und Anhängerfahrzeug. Bekannt sind z.B. in Anhänger-Bremsanlagen verwendete Rückhalteventile mit Schnellentlüftung (Konstruktionsblatt DB 2000-K12, 1976, der Knorr-Bremse AG, München); derartige Rückhalteventile werden bei Anhängerbremsanlagen mit Dauerbremse verwendet, wenn die Vorderachse mit größeren Bremszylindern ausgerüstet ist als die Hinterachse. Das Rückhalteventil hält den Druck an der Vorderachse um einen bestimmten Wert im unteren Bereich zurück, wobei bei steigendem Druck ein Ausgleich zwischen ein- und ausgesteuertem Bremsdruck stattfinden kann. Das tatsächliche Verschleißmaß, z.B. an Vorderachse und Hinterachse, bleibt bei derartigen Rückhalteventilen unberücksichtigt; es kann folglich zu ungleichem Verschleiß der Bremsbeläge von Vorder- und Hinterachse kommen, wenn die Einstellung des Rückhalteventils den tatsächlichen und sich verändernden Fahrgegebenheiten nicht angepaßt ist.

Bei nach internem Stand der Technik bekannten Weiterbildungen von Druckrückhalteventilen unter Betätigung durch eine direkt auf das Druckrückhalteventil einwirkende Magneteinrichtung ist eine Auswerteeinheit vorgesehen. Diese wird von Verschleißsensoren gespeist, welche an der zu überwachenden Bremse wirken und nach Maßgabe eines Verschleißmaßes über die Steuereinheit zu einer Betätigung des Druckrückhalteventils beitragen, in dem Sinne, daß der ausgesteuerte Bremsdruck verschleißabhängig beeinflußbar ist. Eine lastabhängige Beeinflussung der Druckrückhaltung ist mit einer derartigen Anlage nicht möglich.

Bei einer gattungsgemäßen Anordnung (DE-A-3313078), welche eine lastabhängige Beeinflussung wenigstens eines Magnetventiles vorsieht, ist in der Verbindung zwischen dem Betriebsbremsventil und dem Magnetventil ein lastabhängiger Bremskraftregler vorgesehen, derart, daß in das verschleißabhängig gesteuerte Magnetventil ein lastabhängig beeinflußter Betriebsbremsdruck eingeht und in der Folge zur Betätigung wenigstens eines Radbremszylinders vorgesehen ist. Eine lastabhängige Beeinflussung durch den Druck der Federbälge einer Rad- bzw. Achsenaufhängung an Nutzfahrzeugen ist mit einer derartigen Anordnung nicht möglich.

Davon ausgehend besteht die Aufgabe der Erfindung darin, eine Bremsdruckregeleinrichtung der gattungsgemäß Art so auszugestalten, daß die verschleißbedingte Druckrückhaltung in ihrer Höhe von der Beladung eines Fahrzeugs beeinflußbar ist, welches mit Federbälgen für die Rad- bzw. Achsenaufhängung ausgestattet ist.

Zur Lösung dieser Aufgabe dienen die Merkmale nach dem Kennzeichnungsteil des Patentanspruches 1.

Die das Druckrückhalteventil und das Magnetventil vorzugsweise innerhalb eines gemeinsamen Gehäuses enthaltende Ventileinrichtung ermöglicht eine in Abhängigkeit vom Federbalgdruck des Fahrzeugs ablaufende Betätigung des Druckrückhalteventils, in dem Sinne, daß bei teilweise oder voll beladenem Fahrzeug eine stärkere Druckrückhaltung an der überwachten Bremsanlage erfolgt als bei leerem Fahrzeug. Die Einrichtung ist somit zur Verschleißregelung in Nutzfahrzeugen mit Luftfederung einsetzbar, wobei mehrere Schaltungen (Anordnungen der Bremsanlage) möglich sind.

Die Auslegung des Druckrückhalteventils ist innerhalb der Ventileinrichtung variabel; insbesondere kann die Druckrückhaltung auf den unteren Bremsdruckbereich begrenzt sein, wo die meisten Bremsungen stattfinden.

Vorteilhafte Ausgestaltungen und Weiterbildungen sind in weiteren Patentansprüchen aufgeführt.

Die Erfindung ist nachfolgend anhand eines Ausführungsbeispiels unter Bezugnahme auf die beigefügte Zeichnung erläutert.

Fig.1    ist eine Schnittansicht der erfindungsgemäßen Ventileinrichtung; und

Fig.2    ist ein Diagramm unter Darstellung der Druckrückhaltung bei beladungsabhängiger Beeinflussung durch den Federbalgdruck.

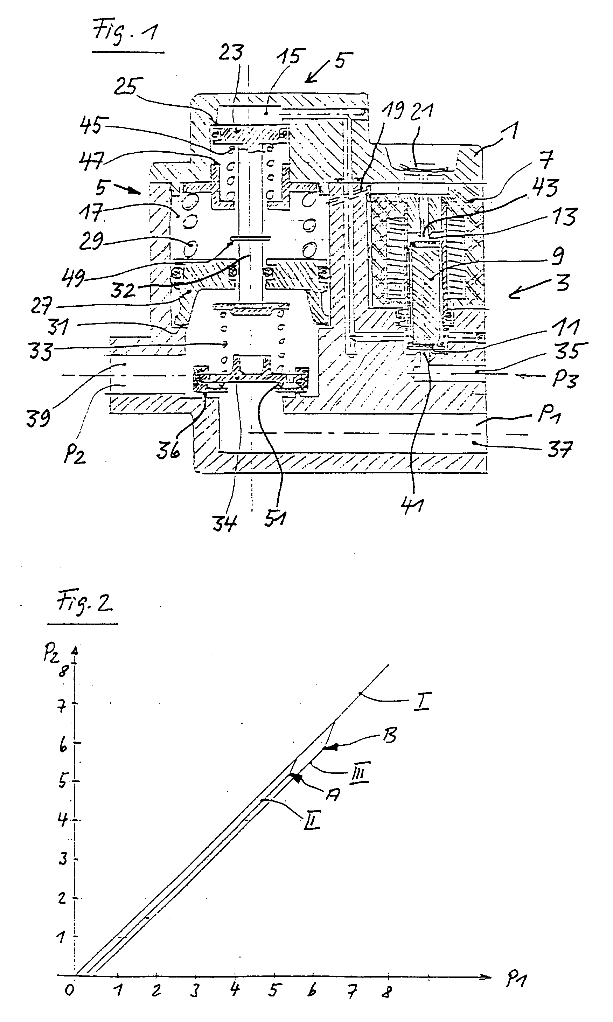

Die in Fig.1 der Zeichnung dargestellte Ventileinrichtung weist in einem Gehäuse 1 ein Magnetventil 3 auf, welches funktionell einem Druckrückhalteventil 5 vorgeschaltet ist. Mit Hilfe des Druckrückhalteventils wird unter Beeinflussung durch das Magnetventil 3 eine Druckrückhaltung, d.h. eine Druckreduzierung des z.B. über ein Bremsventil eingesteuerten Druckes p1 gegenüber den ausgesteuerten Druck p2 als Bremsdruck vorgenommen. Die Druckrückhaltung dient zur Reduzierung der Bremskraft und folglich des Verschleisses an den Bremsen derjenigen Achse, welcher die erfindungsgemäße Ventileinrichtung zugeordnet ist, wobei man unterstellt, daß der Verschleiß an dieser hinsichtlich der Druckbeaufschlagung beeinflußten Achse größer ist als an den Bremsen der weiteren Achse (n). Ist davon auszugehen, daß der Verschleiß an den Bremsen der Hinterachse des Fahrzeuges im allgemeinen größer ist als an den Bremsorganen der Vorderachse, dann ist die Ventileinrichtung aus Druckrückhalteventil und Magnetventil der Hinterachse zugeordnet.

Das Magnetventil 3 steht mit einer Steuereinheit des Fahrzeugs in Verbindung, wobei die elektrische Ansteuerung (Stromstärke) des Magneten 7 in Abhängigkeit des Verschleisses erfolgt, welcher über Verschleißsensoren an den Bremsbelägen der jeweiligen Achse ermittelt und in der Steuereinheit ausgewertet wird. Der Magnet 7 wirkt gegenüber einem Anker 9, welcher bei Magneterregung von einem Sitz 11 abgehoben und an einen weiteren Sitz 13 angelegt wird, wobei der am Sitz 11 anstehende Druck über Bohrungen in die gemäß Darstellung an der Oberseite des Druckrückhalteventils 5 befindliche Kammer 15 gelangt. Bei dem in Rede stehenden Druck wird erfindungsgemäß der an der Achse bestehende Federbalgdruck verwendet, welcher demgemäß lastabhängig die Bremsdruckrückhaltung, d.h. Druckreduzierung auf den Druck p2 in Abhängigkeit von der Betätigung durch das Magnetventil steuert.

Die Bauteile der in Fig.1 dargestellten Ventileinrichtung werden nachfolgend unter Bezugnahme auf ihre Funktionsweise erläutert:

In Fig.1 ist die Betriebsruhestellung dargestellt. Der Magnet 7 ist nicht erregt, der Sitz 11 ist abgesperrt. Die Kammer 15 und die Kammer 17 (über eine Bohrung 19) sind über das Entlüftungsventil 21 mit der Atmosphäre verbunden. Der unterhalb der Kammer 15 befindliche Kolben 23 befindet sich am oberen Anschlag 25; der Kolben 27 wird durch die vorgespannte Feder 29 an den Anschlag 31 gedrückt. Die Feder 33 ist in dieser Lage ungespannt, d.h. F (Federkraft) = 0. Der Ventilteller 34 liegt ohne Federbelastung auf dem Ventilsitz 36. Am Anschluß 35 steht der Luftfederbalgdruck p3 an. Wird am Eingang 37 ein Druck aufgebaut, wird also gebremst, so gelangt dieser Druck ohne Rückhaltung vom Eingang 37 zum Ausgang 39, d.h. p2 = p1, demnach ist Δp = 0.

Wird der Magnet 7 erregt, wird bei unverändertem Luftfederbalgdruck p3 eine konstante Druckrückhaltung erzeugt. Der Anker 9 wird nach oben gezogen, dadurch wird der Einlaß 41 am Sitz 11 geöffnet und der Auslaß 43 am Sitz 13 geschlossen. Der Kolben 23 wird vom Balgdruck beaufschlagt und und mit einem Stößel 32 gegen die Kräfte der Federn 45 und 33 nach unten verschoben, bis am Kolben Kräftegleichgewicht herrscht. Die dabei durch den Stößel 32 gegenüber dem Ventilteller 34 wirkende Kraft der Feder 33 bestimmt die aktuelle Druckrückhaltung. Bei einem bestimmten Luftfederbalgdruck bei beladenem Fahrzeug wird der Weg des Kolbens 23 durch den Anschlag 47 begrenzt, wodurch sich die maximale Druckdifferenz Δp = p1 - p2 einstellt. Die gewünschte Druckrückhaltung Δp in Abhängigkeit der fahrzeugspezifischen Federbalgdrücke bei leerem und beladenem Fahrzeug (Fig.2) wird durch die Auslegung der Federn 45 und 33 bestimmt. Insbesondere die Feinabstimmung erfolgt durch die Kraft der Feder 45.

Um die Druckrückhaltung auf den unteren Bremsdruckbereich zu begrenzen, ist eine Zusatzeinrichtung im Druckrückhalteventil integriert. Sie besteht aus dem Kolben 27 und der Feder 29. Bei einem bestimmten ausgesteuerten Druck p2 wird der Kolben 27 gegen die vorgespannte Fede 29 nach oben verschoben und der in seiner unteren Stellung befindliche Kolben 23 über den Bund 49 mitgenommen. Hierbei wird die Druckrückhaltung aufgehoben, d.h. die Feder 33 wird entspannt.

Gemäß Darstellung in Fig.1 ist am Ventilteller 34 ein Rückschlagventil 51 integriert. Dieses Rückschlagventil ermöglicht in üblicher Weise volle Rückströmung des Bremsdruckes, wenn der Druck am Eingang 37 abgebaut wird.

In Fig.2 der Zeichnung ist der ausgesteuerte Bremsdruck p2 gegenüber dem eingesteuerten Bremsdruck p1 wiedergegeben. Der Druckverlauf I des ausgesteuerten Druckes liegt bei stromlosem Magnetventil vor, d.h. das Druckrückhalteventil mit seinem Kolben 23 ist nicht beaufschlagt, somit ist die Druckrückhaltung Δp = 0. Der Druckverlauf II entspricht dem Zustand bei erregtem Magnetventil und teilbeladenem Fahrzeug, während der Druckverlauf III dem Zustand bei erregtem Magnetventil und vollbeladenem Fahrzeug entspricht. Die Punkte A und B an den Druckverläufen II und III geben den Schaltpunkt wieder, bei welchem sich der Kolben 27 nach oben gegen den Anschlag 49 anlegt, demnach die Druckrückhaltung aufhebt. Die Druckverläufe II und III gehen hierdurch jeweils in den Druckverlauf I über.

**Bezugszeichenliste**

| 1 | Gehäuse |
|---|---|
| 3 | Magnetventil |
| 5 | Druckrückhalteventil |
| 7 | Magnet |
| 9 | Anker |
| 11 | Sitz |
| 13 | Sitz |
| 15 | Kammer |
| 17 | Kammer |
| 19 | Bohrung |
| 21 | Entlüftungsventil |
| 23 | Kolben |
| 25 | Anschlag |
| 27 | Kolben |
| 29 | Feder |
| 31 | Anschlag |
| 32 | Stößel |
| 33 | Feder |
| 34 | Ventilteller |

| 35 | Anschluß |
| 36 | Sitz |
| 37 | Eingang |
| 39 | Ausgang |
| 41 | Einlaß |
| 43 | Auslaß |
| 45 | Feder |
| 47 | Anschlag |
| 49 | Bund |
| 51 | Rückschlagventil |

**Patentansprüche**

1. Bremsdruckregeleinrichtung mit Verschleißoptimierung zwischen Bremsen von Nutzfahrzeugen mit Luftfederung, mit einer durch eine Steuereinheit elektrisch angesteuerten Ventileinrichtung (3,5), deren Ansteuerung in Abhängigkeit des Verschleisses erfolgt, welcher durch Verschleißsensoren an den überwachten Bremsbelägen ermittelt und in der Steuereinheit ausgewertet wird, dadurch gekennzeichnet, daß die Ventileinrichtung aus einem durch den Druck (p3) in den Federbälgen der Rad- bzw. Achsenaufhängung betätigten Druckrückhalteventil (5) und einem von der Steuereinheit verschleißabhängig angesteuerten, den anstehenden Druck der Federbälge in Richtung des Druckrückhalteventils aussteuernden Magnetventil (3) besteht.

2. Bremsdruckregeleinrichtung nach Anspruch 1, gekennzeichnet durch folgende Merkmale:
   a) das Druckrückhalteventil (5) weist wenigstens einen Einlaß (37) und wenigsten einen Auslaß (39) auf;
   b) zwischen Einlaß (37) und Auslaß (39) befindet sich ein von einem federbelasteten Ventilteller (34) schließbarer Ventilsitz (36);
   c) in Schließrichtung des Ventiltellers (34) wirkt auf diesen unter Zwischenschaltung einer Feder (33) ein Stößel (32) ein; und
   d) der Stößel (32) trägt einen über das vom Magnetventil (3) anstehenden Druck (p3) der Federbälge beaufschlagbaren Kolben (23).

3. Bremsdruckregeleinrichtung nach Anspruch 1, gekennzeichnet durch folgende Merkmale:
   a) das Magnetventil weist wenigstens einen Einlaß und wenigstens einen Auslaß auf;
   b) zwischen Einlaß und Auslaß des Magnetventils (3) befindet sich ein von einem Anker (9) schließbarer Sitz (11);
   c) am Einlaß des Magnetventils (3) steht der Druck (p3) der Felderbälge der Rad- bzw. Achsenaufhängung an;

d) der Auslaß des Magnetventils steht über Bohrungen mit einer Kammer (15) in Verbindung, welche vom Kolben (23) des Druckrückhalteventiles (5) begrenzt ist; und
   e) in Öffnungsrichtung des Ankers (9) wirkt auf diesen der Magnet (7) des Magnetventiles ein, derart, daß bei Erregung des Magneten der Kolben (23) durch den Druck der Federbälge der Rad- bzw. Achsenaufhängung beaufschlagbar ist.

4. Bremsdruckregeleinrichtung nach Anspruch 3, dadurch gekennzeichnet, daß die Kammer (15) des Druckrückhalteventiles (5) in geschlossener Position des Ankers (9) durch ein von diesem überwachtes Entlüftungsventil (21) entlüftbar ist.

5. Bremsdruckregeleinrichtung nach Anspruch 2, dadurch gekennzeichnet, daß die den Ventilteller (34) gegenüber seinem Sitz (36) verspannende Feder (33) zwischen Ventilteller und Stößel angeordnet ist, und daß der mit dem Stößel verbundene Kolben (23) gegen die Kraft einer zusätzlichen Feder (45) bewegbar ist.

6. Bremsdruckregeleinrichtung nach Anspruch 2 oder 5, dadurch gekennzeichnet, daß dem Stößel (32) eine Kolben-/ Federanordnung (27;29) zugeordnet ist, welche die Druckrückhaltung auf den unteren Bremsdruckbereich begrenzt.

7. Bremsdruckregeleinrichtung nach Anspruch 6, gekennzeichnet durch folgende Merkmale:
   a) der Stößel (32) ist unter Abdichtung von einem relativ zu ihm verschieblichen Kolben (27) umgeben , welcher vom ausgesteuerten Bremsdruck gegen die Kraft einer Feder (29) beaufschlagbar ist; und
   b) am Außenumfang des Stößels (32) befindet sich ein Bund (49), an welchem der Kolben bei Erreichen eines vorherbestimmten ausgesteuerten Bremsdruckes anlegbar ist, derart, daß eine Begrenzung der Stößelbewegung erfolgt.

**Claims**

1. Brake pressure control device having means for optimising wear of brakes in commercial vehicles with pneumatic suspension, having a valve device (3, 5) controlled electrically by a control unit, the control being carried out in dependence on the wear which is determined by wear sensors on the monitored brake linings and evaluated in the control unit, characterised in that the valve device comprises a pressure-limiting valve (5) actuated by the pressure (p3) in the spring bellows of the wheel and axle suspension, and a solenoid valve (3) controlled by the control unit in dependence on wear and controlling the prevailing pressure of the spring bellows in the direction of the pressure-limiting pressure valve.

2. Brake pressure control device according to claim 1, characterised by the following features:

a) the pressure-limiting pressure valve (5) has at least one inlet (37) and at least one outlet (39);

b) between the inlet (37) and the outlet (39) there is a valve seat (36) which can be closed by a spring-loaded valve disc (34);

c) a stem (32) acts on the valve disc (34) in its closing direction, with the interposition of a spring (33); and

d) the stem (32) carries a piston (23) which can be acted on by means of the pressure (p3) of the spring bellows arising from the solenoid valve (3).

3. Brake pressure control device according to claim 1, characterised by the following features:

a) the solenoid valve has at least one inlet and at least one outlet;

b) between the inlet and the outlet of the solenoid valve (3) there is a seat (11) which can be closed by an armature (9);

c) at the inlet of the solenoid valve (3) the pressure (p3) of the spring bellows of the wheel or axle suspension prevails;

d) by means of bores the outlet of the solenoid valve is in connection with a chamber (15) which is limited by the piston (23) of the pressure-limiting pressure valve (5); and

e) the magnet (7) of the solenoid valve acts on the armature (9) in its opening direction in such a way that when the magnet is excited the piston (23) can be acted on by the pressure of the spring bellows of the wheel or axle suspension.

4. Brake pressure control device according to claim 3, characterised in that in the closed position of the armature (9) the chamber (15) of the pressure-limiting valve (5) can be ventilated by a ventilation valve (21) monitored by it.

5. Brake pressure control device according to claim 2, characterised in that the spring (33) bracing the valve disc (34) with respect to its seat (36) is disposed between the valve disc and the stem, and in that the piston (23) connected to the stem can be moved against the force of an additional spring (45).

6. Brake pressure control device according to claim 2 or 5, characterised in that a piston/spring arrangement (27;29) is associated with the stem and limits the pressure retention to the lower brake pressure region.

7. Brake pressure control device according to claim 6, characterised by the following features:

a) the stem (32) is enclosed with sealing by a piston (27) movable relative to it which can be acted on by the controlled brake pressure against the force of a spring (29); and

b) on the outer circumference of the stem (32) there is a collar (49) against which the piston can bear when a predetermined controlled brake pressure is reached, in such a way that movement of the stem is limited.

**Revendications**

1. Dispositif de régulation de pression de freinage, à optimisation d'usure par frottement entre les freins de véhicules utilitaires, à suspension pneumatique, comprenant un dispositif à soupapes (3, 5) commandé électriquement par une unité de commande, et dont la commande s'effectue en fonction de l'usure par frottement, qui est détectée par des capteurs d'usure aux garnitures de frein surveillées, et évaluée dans l'unité de commande, caractérisé en ce que le dispositif à soupapes est constitué d'une soupape de retenue de pression (5) actionnée par la pression (p3) dans les soufflets de ressort de la suspension de roue ou bien de la suspension d'essieu, et d'une soupape magnétique (3) commandée par l'unité de commande, en fonction de l'usure par frottement, et contrôlant la pression apparaissant des soufflets de ressort, en direction de la soupape de retenue de pression.

2. Dispositif de régulation de pression de freinage selon la revendication 1, caractérisé par les particularités suivantes:

a) la soupape de retenue de pression (5) présente au moins une entrée (37) et au moins une sortie (39);

b) entre l'entrée (37) et la sortie (39) se trouve un siège de soupape (36) pouvant être fermé par une tête de soupape (34) chargé par ressort;

c) un poussoir (32) agit, par l'intermédiaire d'un ressort (33) intercalé, sur la tête de soupape (34), dans la direction de fermeture de celle-ci; et

d) le poussoir (32) porte un piston (23) pouvant être sollicité par la pression (p3) apparaissant des soufflets de ressort , depuis la soupape magnétique (3).

3. Dispositif de régulation de pression de freinage selon la revendication 1, caractérisé par les particularités suivantes:

a) la soupape magnétique présente au moins une entrée et au moins un sortie;

b) entre l'entrée et la sortie de la soupape magnétique (3) se trouve un siège (11) pouvant être fermé par une armature (9);

c) à l'entrée de la soupape magnétique (3) apparaît la pression (p3) des soufflets de ressort de la suspension de roue ou bien d'essieu;

d) la sortie de la soupape magnétique est en liaison, par l'intermédiaire de perçages, avec une chambre (15), qui est limitée par le piston (23) de la soupape de retenue de pression (5); et

e) l'aimant (7) de la soupape magnétique agit sur l'armature (9) dans la direction d'ouverture de celle-ci, de manière telle, que lors de l'excitation de l'aimant, le piston (23) peut être sollicité par la pression des soufflets de ressort de la suspension de roue ou bien d'essieu.

4. Dispositif de régulation de pression de freinage selon la revendication 3, caractérisé en ce que la chambre (15) de la soupape de retenue de pression (5), dans la position de fermeture de l'armature (9), peut être purgée d'air par une soupape de purge d'air (21) surveillée par l'armature.

5. Dispositif de régulation de pression de freinage selon la revendication 2, caractérisé en que le ressort (33) contraignant la tête de soupape (34) contre son siège (36), est agencé entre la tête de soupape et le poussoir, et en ce que le piston (23) relié au poussoir est mobile à l'encontre de la force d'un ressort supplémentaire (45).

6. Dispositif de régulation de pression de freinage selon la revendication 2 ou 5, caractérisé en qu'au poussoir (32) est associé un agencement piston/ressort (27; 29), qui limite la retenue de pression sur la plage inférieure de pression de freinage.

7. Dispositif de régulation de pression de freinage selon la revendication 6, caractérisé par les particularités suivantes:

a) le poussoir (32) est entouré de manière étanche, par un piston (27) susceptible de coulisser par rapport à lui, et pouvant être sollicité, à l'encontre de la force d'un ressort (29), par la pression de freinage contrôlée;

b) à la périphérie extérieure du poussoir (32), se trouve une collerette (49), à laquelle peut venir en appui le piston lorsqu'on atteint une pression de freinage contrôlée, déterminée à l'avance, de façon à ce qu'il se produise une limitation du mouvement du poussoir.

Fig. 1

Fig. 2